# EUROPEAN PATENT SPECIFICATION

(11) **EP 2 204 787 B1**
(45) Date of publication and mention of the grant of the patent: **20.03.2013**
(21) Application number: 08840544.4
(22) Date of filing: 09.10.2008
(51) Int. Cl.: G08B 25/10, G08B 25/00, H04L 12/24, H04L 29/12

(54) **COMMUNICATION SYSTEM AND ALARM**
KOMMUNIKATIONSSYSTEM UND ALARM
SYSTÈME DE COMMUNICATION ET ALARME

(30) Priority: 16.10.2007 JP 2007268732; 26.06.2008 JP 2008166925
(43) Date of publication of application: 07.07.2010
(60) Divisional application: 12181157.4
(73) Proprietor: HOCHIKI CORPORATION, Tokyo 141-8660 (JP)
(72) Inventor: EGAWA, Yoshitaka, Tokyo 141-8660 (JP)
(74) Representative: Kling, Simone
(86) International application number: PCT/JP2008/068374
(87) International publication number: WO 2009/051061

(56) References cited:
- JP-A- 2 228 800
- JP-A- 3 201 196
- JP-A- 2005 018 735
- JP-A- 2005 038 401
- JP-A- 2006 331 096
- JP-A- 2008 033 428

## Description

### TECHNICAL FIELD

The present invention relates to a communication system in which a plurality of communication devices communicate with each other. The present invention also relates to an alarm device which, upon detecting an abnormal condition such as a fire, issues an alarm and also wirelessly transmits a signal to trigger alarms in other alarm devices.

### BACKGROUND ART

Conventionally, wireless intercommunication systems in which wireless communication is performed between a plurality of wireless communication devices have been used. These wireless communication devices take signals output from a sensor or received from another communication device, and transmit the signals wirelessly to the other communication devices; and there are examples such as household alarms which detect fires or gas leaks in a residence and issue an alarm, and monitoring sensors which detect intruders. These wireless communication devices, to enable the identification of the wireless communication device from which a received wireless signal was sent, are each assigned a unique transmission source identification code. When transmitting a wireless signal, the transmission source identification code is added to the wireless signal before the signal is transmitted.

Incidentally, when different wireless intercommunication systems that use the same type of communication device are set up in neighboring buildings, for example, a wireless intercommunication system may receive the wireless signals from another wireless system. In this case, to ensure that each wireless communication device operates properly based only on the wireless signals associated with the local system, there must be a way to distinguish between the wireless signals in the local system and wireless signals from other systems.

Therefore, in the wireless communication devices of conventional wireless intercommunication systems, each wireless communication device has a record of the transmission source identification code of every wireless communication device associated with the local system. Thus, identification of wireless signals was performed by determining whether or not the transmission source identification code included in a received wireless signal matches with any of the recorded transmission source identification codes.

Examples of identification methods for wireless signals using transmission source identification codes include those disclosed in (1) and (2) below (see Patent Document 1 and Patent Document 2 described below).
(1) A method in which the transmission source identification code of every wireless communication device associated with the same wireless intercommunication system is recorded in a storage device such as a memory provided in each wireless communication device (hereafter the "first conventional method").
(2) A method in which: a group code common to a particular wireless intercommunication system is recorded in advance on each wireless communication device in the system. Then identification of wireless signals is performed by adding this group code to wireless signals before transmission (hereafter the "second conventional method").

JP03201196 discloses a communication system using group addresses.

Patent Document 1: Japanese Unexamined Patent Application, First Publication No. 2006-331096
Patent Document 2: Japanese Unexamined Patent Application, First Publication No. H03-201196

### DISCLOSURE OF INVENTION

### [Problems to be Solved by the Invention]

Incidentally, in the case of a communication system according to the background art described above, the following problems are encountered.
That is, with the first conventional method described above, in a large-scale wireless intercommunication system comprising a large number of wireless communication devices, a vast number of transmission source identification codes need to be recorded in the storage devices, which requires that the storage devices have a large capacity. Furthermore, another negative consequence is that code matching takes a long time. Yet another problem is that when adding a new wireless communication device to such a large scale system after the system is already built, in every wireless communication device associated with the system, the transmission source identification code of the newly added wireless communication device must be recorded, and this task imposes a significant burden.

Furthermore, with the second conventional method described above, there is a possibility in that the group code of the local system conflicts with the group code of another system (another system present within the range of the signal of the local system may happen to have been assigned the same group code), in which case the wireless signals cannot be distinguished.

In accordance with the circumstances described in the background art above, an object of the present invention is to provide a communication system which is capable of reliably distinguishing signals, which also reduces the volume of information required to distinguish signals and simplifies the task of adding communication devices to the communication system.

### [Means for Solving the Problems]

To solve the problems associated with the background art above and achieve the object, the present invention employs the following measures:
(1) A communication system of the present invention is provided with a plurality of communication devices which communicate with each other, wherein each of the communication devices is provided with: a storage device which stores a first code for identifying the communication device to the exclusion of others, and a second code defined so as to differ from other communication devices on the basis of the first code and a predetermined reference value; a transmission device which transmits a signal including the first code and the second code to the other communication devices; a reception device which receives the signals transmitted from the transmission devices of the other communication devices; and a control device which performs calculation using the first code and the second code included in the signal received by the reception device, and the first code stored in the storage device, and identifies the signal according to whether or not the value obtained by the above calculation matches with the second code stored in the storage device.

(2) It may be arranged such that the control device: in response to a predetermined input, transmits the signal to the other communication devices via the transmission device; under predetermined conditions, upon receiving the signal from the other communication device, selects either the first code included in the received signal or the first code stored in the storage device based on predetermined rules, and designates the selected code as the reference value; determines the second code from this reference value and the first code stored in the storage device; and stores the thus determined second code in the storage device.

(3) It may be arranged such that each of the communication devices be further provided with an instruction device which inputs to the control device an instruction to set the first code stored in the storage device as the reference value; and the control device: upon receiving input of the instruction from the instruction device, transmits a signal containing an instruction signal indicating that the transmission is taking place in response to input from the instruction device, and the first code, to the other communication devices via the transmission device, and determines the second code based on the first code and stores the second code in the storage device; upon receiving a signal containing the instruction signal and the first code, sets the reference value to the first code included in the signal, then determines the second code from the reference value and the first code stored in the storage device; and stores the thus determined second code in the storage device.

(4) It may be arranged such that the control device: upon receiving a predetermined input and receiving the signal from the other communication device, determines the second code from the first code and the second code included in the signal and the first code stored in the storage device; and stores the thus determined second code in the storage device.

### [Effects of the Invention]

According to the communication system disclosed in (1) above, signals are distinguished based on the first code that differs for each communication device, and the second code defined so as to differ for each communication device on the basis of the first code and the predetermined reference value. Accordingly, the second codes used by the communication devices associated with this communication system do not conflict with the second codes used by the communication devices associated with other communication systems, and signals can be reliably distinguished.

Furthermore, with (2) above, in response to predetermined input, a mutual transmission of the first codes takes place between each of the communication devices. Then, based on predetermined rules the single first code is selected and designated the reference value, and the second code is determined from this reference value and the first code of each communication device. Accordingly, the second codes can be assigned that differ for each communication device, and conflict with the second codes used by communication devices associated with other communication systems can be prevented.

Furthermore, with (3) above, in response to an instruction input from an instruction device of an arbitrary communication device, the first code of that communication device is designated the reference value, and the second code is determined from this reference value and the first code of each communication device. Accordingly, the second codes can be assigned that differ between each communication device, and conflict with second codes used by communication devices associated with other communication systems can be prevented.

Furthermore, with (4) above, when a new communication device is added to the communication system, the second code of the newly added communication device is determined from the first code and the second code contained in the signals transmitted from the other communication devices, and the first code stored in the storage device. Accordingly, even to newly added communication devices, a second code that differs from other communication devices can be assigned. Furthermore, at this time, because no additional setup is required on communication devices that have already been grouped ("grouping" in the context of the present invention means determining second codes and storing the codes in the storage devices of each communication device), the task of adding communication devices can be performed easily.

### BRIEF DESCRIPTION OF THE DRAWINGS

FIG. 1 is a system diagram showing an overview of a communication system provided with a plurality of alarm devices 1.
FIG. 2 is a block diagram showing a functional concept of an electrical configuration of the alarm device 1.
FIG. 3 is a table illustrating examples of transmission source identification codes and group codes stored in a storage section 10 of the alarm device 1.
FIG. 4 is a diagram showing the content of a signal transmitted from a transmission section 11 of an alarm device 1A shown in FIG. 3.
FIG. 5 is a flowchart schematically showing the flow of processing executed by a control section 15.
FIG. 6 is a flowchart showing the flow of signal analysis processing.
FIG. 7 is a flowchart showing the flow of grouping processing.
FIG. 8 is a flowchart showing the flow of group addition processing.
FIG. 9 is a block diagram showing a functional concept of an electrical configuration of the alarm device 1.
FIG. 10 is a flowchart showing the flow of grouping processing.
FIG. 11A is a front view of the outward appearance of an alarm device according to an embodiment of the present invention.
FIG. 11B is a side view of the outward appearance of the alarm device.
FIG. 12 is an explanatory drawing showing a situation where alarm devices are installed in a residence.
FIG. 13 is a block diagram showing a first embodiment of an alarm system using these alarm devices.
FIG. 14 is an explanatory drawing that extracts and shows the transmission source management table in FIG. 13.
FIG. 15 is an explanatory drawing showing the format of an event signal used in the first embodiment.
FIG. 16 is a flowchart showing the processing operations in the first embodiment.
FIG. 17 is a flowchart showing in detail the alarm registration processing of step S3 in FIG. 16.
FIG. 18 is a block diagram showing an example of an alarm system using alarm devices.
FIG 19 is a flowchart showing in detail the alarm registration processing in this example.
FIG. 20 is a block diagram showing another example third embodiment of an alarm system using alarm devices according .
FIG. 21 is a flowchart showing in detail the alarm registration processing in the other example.

### [Explanation of the Reference Symbols]

- 1: Alarm device
- 2: Residence
- 10: Storage section
- 11: Transmission section
- 12: Reception section
- 13: Sensor section
- 14: Alert section
- 15: Control section
- 16: Instruction switch
- 110, 110-1 to 110-5: Alarm device
- 112: Cover
- 114: Main unit
- 115: Mounting hook
- 116: Smoke detector section
- 118: Sound hole
- 120: Alarm stop switch
- 122: LED
- 124: Residence
- 126: Garage
- 128: CPU
- 130: Wireless circuit section
- 131: Antenna
- 132: Storage circuit section
- 134: Sensor section
- 136: Alert section
- 138: Operation section
- 140: Battery power supply
- 142: Transmission circuit
- 144: Reception circuit
- 145: Transmission power switching section
- 146: Memory
- 147: Reception sensitivity switching section
- 148: Event signal
- 149: Field strength measurement section
- 150: Transmission source code
- 152: Group code
- 154: Event code
- 155: Carrier sense threshold value
- 156: Speaker
- 158: Registration switch
- 160: Alarm registration section
- 162: Registration send mode processing section
- 164: Registration receive mode processing section
- 166: Transmission power switching control section
- 168: Transmission source management table
- 170: Abnormal condition monitoring section
- 172: Reception sensitivity switching control section
- 174: Field strength judgment section

### BEST MODE FOR CARRYING OUT THE INVENTION

Communication devices according to a first embodiment and a second embodiment of the present invention are described in detail below with reference to the appended drawings.
First, [I] the fundamental concepts of the first and the second embodiments are described, then [II] the specific details of each embodiment are described, and finally [III] modified examples of these embodiments are described. However, the various embodiments shall not be construed as limiting the invention.

### [1] Fundamental concepts of the first embodiment and second embodiment

First, the fundamental concepts that are common to both embodiments are described. The object of the communication devices according to both embodiments is to perform mutual communication with other communication devices.

The application of the communication devices according to the both embodiments is arbitrary; for example, the present invention may be applied to any communication devices that communicate with each other, such as residential alarm devices of which a plurality are installed in the kitchen, stairway, bedrooms, living room, and other parts of a residence, fire alarms of which a plurality are installed in an underground complex, and monitoring sensors. Furthermore, the mode of communication is also arbitrary, and the way of communication including wireless, wired, and optical communication can be used.

One characteristic of the communication devices according to the embodiments, in general terms, is that each of the plurality of communication devices associated with a single communication system stores a group code determined uniquely for each communication device on the basis of a transmission source identification code unique to each communication device and a predetermined reference value, and communicates by means of a signal to which the group code and a transmission source identification code are added. Another characteristic is that upon receiving this signal, the communication device performs an operation using the group code and transmission source identification code included in the signal, as well as its own transmission source identification code, and identifies the signal according to whether or not the determined value matches with the group code stored in the communication device.

Consequently, there is no need to record the transmission source identification codes of every communication device associated with the local system in the storage device of each communication device, which realizes advantages such as reducing data volume and simplifying the task of adding communication devices to the communication system. Furthermore, each communication device, by performing communication using a unique group code that differs from that of the other communication devices, can judge whether or not a received signal comes from a communication device associated with the local system by an operation that uses these unique group codes. As a result, conflict with the group codes of other systems can be prevented, and signals originating from the local system can be reliably identified.

### [II] Specific details of the first embodiment and the second embodiment

Next, the specific details of the embodiments are described. Although as mentioned above the application of the communication devices in the embodiments is arbitrary, the descriptions below use an example of application to a wireless residential alarm device (hereafter "alarm device") which is installed in a residence and communicates using wireless signals.

### [First embodiment]

First, the first embodiment is described. In this embodiment, either a received first code or a first code stored in the storage device is selected and designated the reference value.

### (Communication system overview)

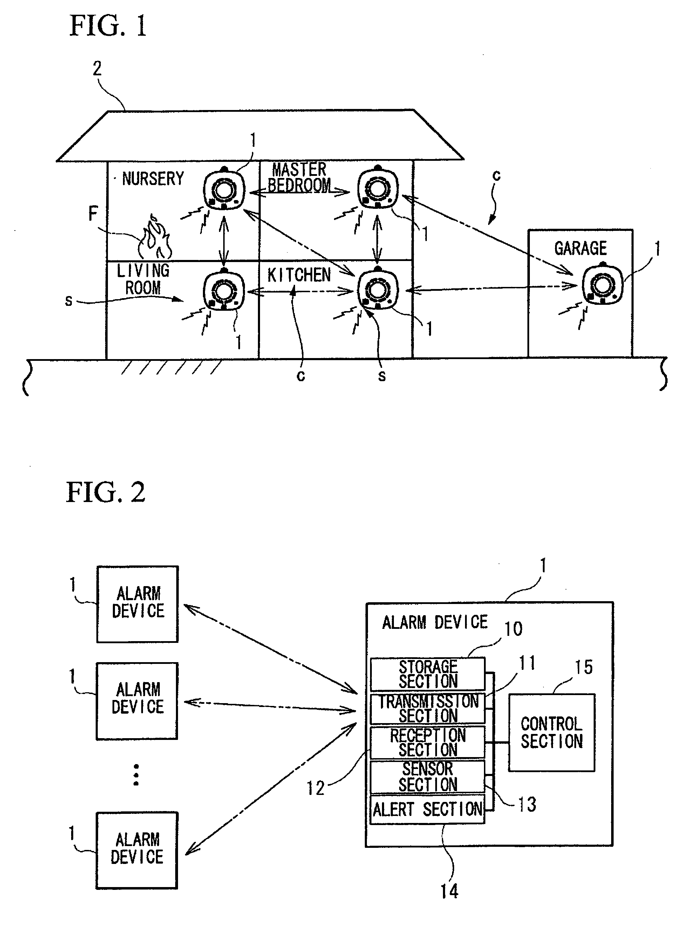

First, a communication system including a plurality of alarm devices is described in general terms. FIG. 1 is a system diagram showing an overview of a communication system comprising a plurality of alarm devices. In FIG. 1, the letter c indicates communication, and the letter s indicates an alarm (audible alarm). As shown in FIG. 1, in the first embodiment, an alarm device 1 is installed in each room of a residence 2. When a fire or the like occurs in any of these rooms, and is detected by the alarm device 1 in that room, this alarm device 1 emits an alarm and at the same time transmits a wireless signal containing details of the alarm to the alarm devices 1 in the other rooms. The alarm devices 1 in the other rooms, based on the content of the received wireless signal, emit an alarm and also transmit a wireless signal containing details of the alarm. As a result, an alarm is also emitted by the alarm devices 1 in rooms where no fire or the like has occurred, and the residents of the residence 2 are able to take appropriate actions.

### (Construction of alarm device 1)

Next, the construction of the alarm device 1 is described. FIG. 2 is a block diagram showing an overview of the construction of the alarm device 1. As shown in FIG. 2, the alarm device 1 is provided with a storage section 10, a transmission section 11, a reception section 12, a sensor section 13, an alert section 14, and a control section 15.

### (Construction of alarm device 1: storage section 10)

The storage section 10 stores the transmission source identification codes for uniquely identifying each alarm device 1 and the group codes for identifying signals, and corresponds to the storage device in the claims. Details of the transmission source identification codes and group codes are described later. The specific configuration of the storage section 10 is arbitrary. For example, a non-volatile storage device such as an IC memory can be used.

### (Construction of alarm device 1: transmission section 11 and reception section 12)

The transmission section 11 transmits signals to other alarm devices 1, and corresponds to the transmission device in the claims. The reception section 12 receives signals transmitted from the transmission sections 11 of the other alarm devices 1, and corresponds to the reception device in the claims. The specific configuration of the transmission section 11 and the reception section 12 is arbitrary, but because in the first embodiment an assumption is made that communication occurs wirelessly, the transmission section 11 can be a known type of wireless transmission device, and the reception section 12 can be a known type of antenna.

### (Construction of alarm device 1: sensor section 13)

The sensor section 13, within the monitoring area where the alarm device 1 is installed, detects a detection target such as a fire or gas leak. The detection targets and principles for detecting those targets are arbitrary. For example, the smoke or heat produced by a fire may be the detection target, and to detect these targets, electronic devices such as infrared LEDs, photodiodes, and thermistors can be used.

### (Construction of alarm device 1: alert section 14)

The alert section 14, based on information output from the control section 15, performs predetermined alert processing. The specific details of the alert processing are arbitrary. For example, luminescent display by means of LEDs, emitting a buzzer or other sound, or output of an electrical signal may be performed.

### (Construction of alarm device 1: control section 15)

The control section 15 is primarily for subjecting signals received by the reception section 12 to analysis processing, and corresponds to the control device in the claims. Furthermore, the control section 15 performs data input/output and control for the storage section 10, the transmission section 11, the reception section 12, the sensor section 13, and the alert section 14. Including the analysis processing, details of the processing executed by the control section 15 are described later. The specific construction of the control section 15 is arbitrary, but can be provided with, for example, a control program such as an operating system, programs that define various procedures and the like, an internal memory for storing the necessary data, and a CPU (Central Processing Unit) which executes the programs.

### (Transmission source identification code and group code)

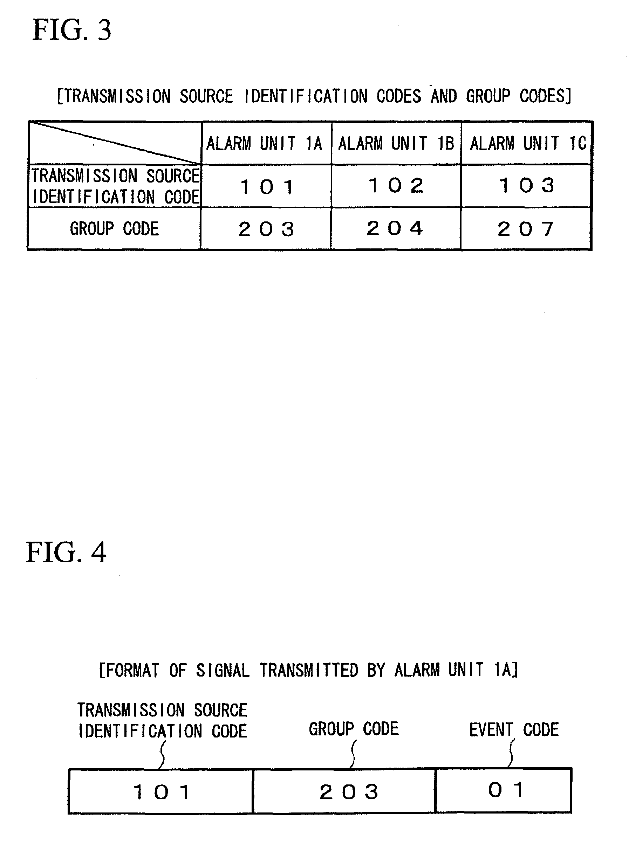

Next, the transmission source identification code and the group code are described. FIG. 3 is a table illustrating examples of transmission source identification codes and group codes stored in the storage section 10 of the alarm device 1 in the communication system.

The transmission source identification code, to allow the alarm device 1 serving as the transmission source of a given signal to be uniquely identified, is a code individually assigned to each alarm device 1, and corresponds to the first code in the claims. The specific content of the transmission source identification code is arbitrary, but may be a multi-digit number, for example. In the example shown in FIG. 3, the transmission source identification codes of alarm devices 1A, 1B, and 1C are set as 101, 102, and 103, respectively. The method of setting the transmission source identification codes is arbitrary. For example, the codes may be stored in the storage section 10 in advance by a predetermined input device before the alarm device 1 leaves the factory.

A group code, to allow the identification of the communication system with which the alarm device 1 serving as the transmission source of a signal is associated, is a code assigned to each alarm device 1 so as to differ from that of the other alarm devices 1, and corresponds to the second code in the claims. The specific content of the group code is arbitrary, but may be a multi-digit number, for example. In the example shown in FIG. 3, the group codes of alarm devices 1A, 1B, and 1C are set as 203, 204, and 207, respectively. These group codes, in the grouping processing described later, are set by the control section 15, and stored in the storage section 10. Details of the grouping processing including the method of setting these group codes are described later.

### (Signal content)

Next, the format of the signals transmitted and received between the alarm devices 1 is described. FIG. 4 is a diagram showing the content of a signal transmitted from the transmission section 11 of the alarm device 1A in FIG. 3. As shown in FIG. 4, the signal transmitted from the transmission section 11 contains, in order from the beginning, the transmission source identification code of this alarm device 1, the group code, and an event code. The event code, in order to identify a specific event to be propagated to other alarm devices 1, such as a fire detected by the alarm device 1 serving as the transmission source of the signal or an abnormal condition affecting the alarm device 1, is a code that is associated with such an event and set accordingly. The contents of the event code are arbitrary, but may be a multi-digit number ("01" in FIG. 4) corresponding to a particular event such as a fire or gas leak.

### (Processing of control section 15: Overview)

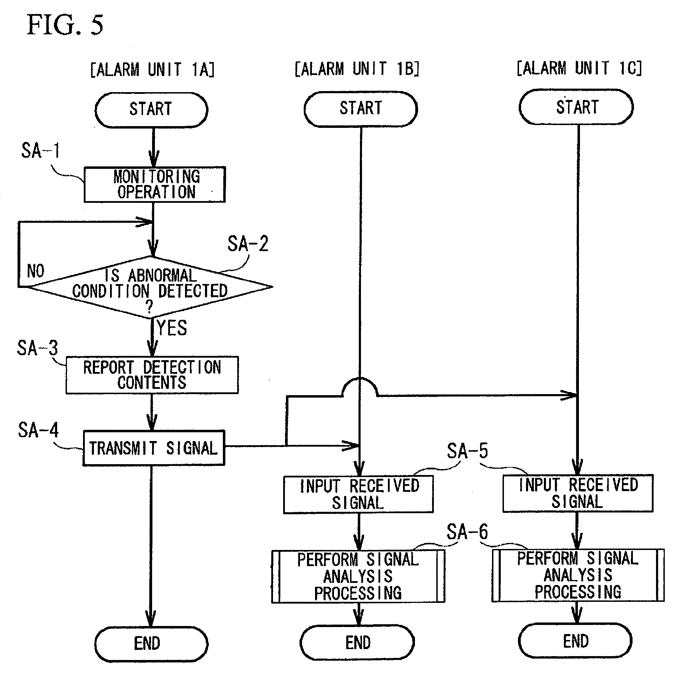

Next, details of the various processing executed by the control section 15 are described. First, the general flow of the processing executed by the control section 15 is described. FIG. 5 is a flowchart schematically showing the flow of processing executed by the control section 15. Here, the description follows an example in which the alarm devices 1A, 1B, and 1C are installed in a residence, and the alarm devices 1A, 1B, and 1C are each placed in monitoring mode by a predetermined input operation. The alarm devices 1A and 1B are associated with the same communication system, and the alarm device 1C is associated with a different communication system.

When monitoring mode is begun by a predetermined input operation, the sensor section 13 executes a monitoring operation with respect to the monitor area (step SA-1). If the sensor section 13 of the alarm device 1A detects a fire or the like (Yes in step SA-2), then based on the detection signal output from the sensor section 13, the control section 15 of the alarm device 1A reports the detection contents by means of the alert section 14 (step SA-3). In addition, the control section 15 transmits a signal using the communication section (step SA-4). At this time, the control section 15 references the storage section 10, inputs the transmission source identification code and group code stored in the storage section 10 to the communication section, and appends these codes to the signal transmitted from the communication section.

When the signal transmitted from the alarm device 1A is received by the communication sections of the alarm devices 1B and 1C, these communication sections input the received signal to the control section 15 (step SA-5). The control sections 15 of the alarm devices 1B and 1C subject the contents of the input signal to signal analysis processing, and then perform predetermined processing based on the analysis results (step SA-6).

### (Processing of control section 15: Signal analysis processing)

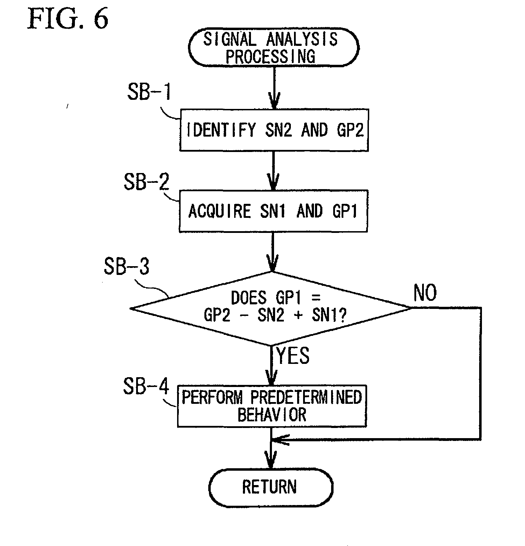

Next, the signal analysis processing executed by the control section 15 is described. FIG. 6 is a flowchart showing the flow of signal analysis processing. When a signal received by the communication section is input into the control section 15, the control section 15 identifies the transmission source identification code (hereafter SN2) and the group code (hereafter GP2) added to the input signal (step SB-1). As described above, when a signal transmitted from the alarm device 1A is received, because the signal conforms to a known format, SN2 is identified as "101" and GP2 as "203". Next, the control section 15 references the storage section 10, and acquires the transmission source identification code (hereafter SN1) and group code (hereafter GP1) stored in the storage section 10. Here, in the case of the control section 15 of the alarm device 1B, "102" is acquired for SN1 and "204" for GP1, and in the case of the control section 15 of the alarm device 1C, "103" is acquired for SN1 and "207" for GP1.

Then, an operation is performed to distinguish the received signal (step SB-3). Specifically, from SN2, GP2, SN1, and GP1 identified in the aforementioned steps SB-1 and SB-2, a determination is made as to whether or not the equation GP1 = GP2 - SN2 + SN1 (hereafter equation 1) is satisfied.

For example, in the case of alarm device 1B, because GP1 = 204 and GP2 - SN2 + SN1 = 203 - 101 + 102 = 204, equation 1 is satisfied. On the other hand, in the case of alarm device 1C, GP1= 207 and GP2 - SN2 + SN1= 203 - 101 + 103 = 205, and equation 1 is not satisfied.

As a result of the operation, if equation 1 is satisfied (Yes in step SB-3), the received signal is identified as a processing target signal, and the alert section 14 and the transmission section 11 are operated on the basis of the event code included in the received signal (step SB-4). For example, if information indicating a fire or the like is included as the event code, the control section 15 causes an alarm to be emitted by the alert section 14, and also transmits a signal containing this information via the communication section. On the other hand, if equation 1 is not satisfied (No in step SB-3), the received signal is identified as not a processing target, and the flow returns to the main routine without the received signal being subjected to processing.

### (Processing of control section 15: Grouping processing)

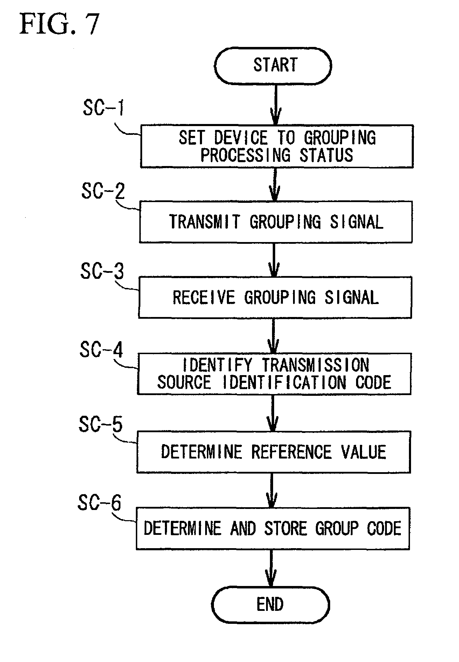

Next, the grouping processing by which the group codes are assigned to each alarm device 1 is described. The timing of this grouping processing is arbitrary. For example, a plurality of the alarm devices 1 may be grouped in advance at the factory, or a plurality of the alarm devices 1 may be grouped at the time of their installation in a residence or the like. Furthermore, any number of alarm devices 1 can be subjected to grouping processing, but in the description below, the assumption is made that grouping processing is performed on the two alarm devices 1A and 1B shown in FIG. 3. FIG. 7 is a flowchart showing the flow of grouping processing.

When performing grouping processing of the alarm device 1, the alarm device 1 is set to grouping processing mode by a predetermined input operation (step SC-1). Upon entering to the grouping processing mode, the control section 15 references the storage section 10 and acquires the transmission source identification code. In addition, a grouping signal containing the acquired transmission source identification code, and information indicating that the signal is related to the grouping processing, is transmitted by means of the communication section (step SC-2).

The communication section, upon receiving a grouping signal from another alarm device 1, inputs this signal to the control section 15 (step SC-3). The control section 15 identifies the transmission source identification code added to the input grouping signal (step SC-4). Then, the control section 15 compares the identified transmission source identification code with its own transmission source identification code acquired in step SC-1, and defines whichever transmission source identification code has the largest value as the reference value (step SC-5). Furthermore, a value obtained by adding the defined reference value to the own transmission source identification code of the alarm device 1 is stored in the storage section 10 as the group code (step SC-6), thereby concluding the grouping processing.

In the grouping of alarm devices 1A and 1B, because the transmission source identification code of the alarm device 1A is "101, and the transmission source identification code of the alarm device 1B is "102", in step SC-5, the transmission source identification code "102" of the alarm device 1B which is the larger value is defined as the reference value. Then, the reference value "102" is added to the transmission source identification code of each alarm device 1, yielding 101 + 102 = 203 in alarm device 1A and 102 + 102 = 204 in alarm device 1B, which are stored as the group code in the respective storage sections 10.

Moreover, in a case where three or more alarm devices 1 are subjected to grouping processing, of the transmission source identification codes of each of the alarm devices 1, by defining the transmission source identification code with the largest value as the reference value, the group codes can be determined in the same manner as in the description above. Furthermore, the rules that govern determining the reference value are arbitrary. For example, of the transmission source identification codes of the alarm devices 1, the transmission source identification code with the smallest value may be defined as the reference value.

### (Processing of control section 15: Group addition processing)

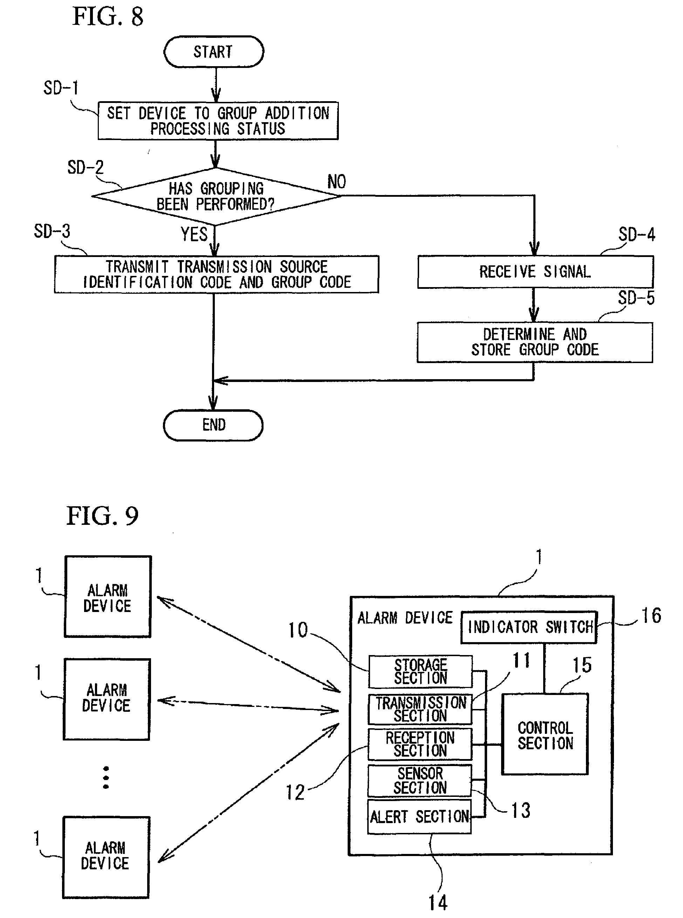

Next, the group addition processing, executed to add a new alarm device 1 to a communication system with which a plurality of grouped alarm devices 1 are associated, is described. The number of alarm devices 1 in the existing group and the number of alarm devices 1 being added is arbitrary, but the description below assumes that the alarm devices 1A and 1B shown in FIG. 3 are grouped, and the alarm device 1C is to be newly added. FIG. 8 is a flowchart showing the flow of group addition processing.

When executing group addition processing, by a predetermined input operation, the already grouped alarm devices 1 and the alarm device 1 to be newly added are set to group addition processing mode (step SD-1). Upon entering group addition processing mode, the control section 15 determines whether or not grouping processing has already been performed (step SD-2). The judgment method used in this instance is arbitrary. For example, a judgment may be made based on whether or not the storage section 10 contains a group code. Furthermore, whether or not grouping processing has taken place can be input by an input device such as a DIP switch.

If grouping has been performed (Yes in step SD-2), the control section 15 acquires the transmission source identification code and group code stored in the storage section 10, and transmits a signal containing these codes via the communication section (step SD-3).

On the other hand, if grouping has not been performed (No in step SD-2), the control section 15 receives the signals transmitted from other alarm devices 1 via the communication section (step SD-4). When a signal received by the communication section is input into the control section 15, the control section 15 identifies the transmission source identification code (hereafter SN2) and group signal (GP2) from the input signal. Also, the control section 15 references the storage section 10 to acquire its own transmission source identification code (hereafter SN1), and stores the value calculated by GP2 - SN2 + SN1 in the storage section 10 as its own group code (hereafter GP1) (step SD-5).

If the alarm device 1A has been subjected to grouping processing as described above, then in step SD-3, the alarm device 1A transmits a signal containing the transmission source identification code "101" and the group code "203". On the other hand, the alarm device 1C, upon receiving the signal transmitted from the alarm device 1A, identifies from the received signal "101" for SN2 and "203" for GP2, and acquires "103" for SN1. Based on these values, by the control section 15, GP1 = GP2 - SN2 + SN1 = 203 - 101 + 103 = 205 is calculated, and "205" is stored in the storage section 10 as the group code of the alarm device 1C. As a result, signals transmitted from the alarm device 1C can be identified by the alarm devices 1A and 1B as processing target signals.

### (Effects of the first embodiment)

In this manner, according to the first embodiment, because signal identification is performed based on a transmission source identification code, as well as a group code determined on the basis of the transmission source identification code and a predetermined reference value so as to differ from that of other alarm devices 1, signal identification can be performed reliably because the group codes used by the alarm devices 1 associated with one communication system do not conflict with the group codes used by the alarm devices 1 associated with other communication systems.

Furthermore, during grouping processing, each alarm device 1 being grouped sends its transmission source identification code to the other alarm devices 1, the transmission source identification code with the largest value is designated the reference value, and the group codes are determined from this reference value and the transmission source identification code of each alarm device 1. Accordingly, a different group code can be assigned to each alarm device 1, and conflicts with the group codes used by alarm devices 1 associated with other communication systems can be prevented.

Moreover, when adding a new alarm device 1 to a communication system with which a plurality of grouped alarm devices 1 are already associated, the group code of the newly added alarm device 1 is determined from the transmission source identification codes and group codes included in signals transmitted from the already-grouped alarm devices 1, and the transmission source identification code stored in the storage section 10 of the newly added alarm device 1. Accordingly, to the newly added alarm device 1, a group code can be assigned that differs from that of the other alarm devices 1. Furthermore, because no additional setup is required with respect to the already-grouped alarm devices 1, the task of adding an alarm device 1 can be performed with ease.

### [Second embodiment]

Next, a second embodiment is described. This embodiment includes an instruction device to be described later.

The construction of the present embodiment, except where specifically mentioned, is substantially the same as the construction of the first embodiment, and thus elements which have substantially the same configuration as in the first embodiment are assigned the same reference numerals and/or names as necessary, and description thereof is omitted.

### (Construction of alarm device 1)

First, the construction of the alarm device 1 is described. FIG. 9 is a block diagram showing an overview of the construction of the alarm device 1. As shown in FIG. 9, the alarm device 1 includes an instruction switch 16. The instruction switch 16 is for inputting an instruction to the control section 15 that designates the transmission source identification code stored in the storage section 10 as the reference value, and corresponds to the instruction device in the claims. The specific construction of the instruction switch 16 is arbitrary. For example, a push button switch or DIP switch can be used.

### (Processing of control section 15: Grouping processing)

Next, the content of the processing executed by the control section 15 is described. Because the signal analysis processing and group addition processing are the same as in the first embodiment, descriptions thereof are omitted, and only the grouping process by which group codes are assigned to each alarm device 1 is described.

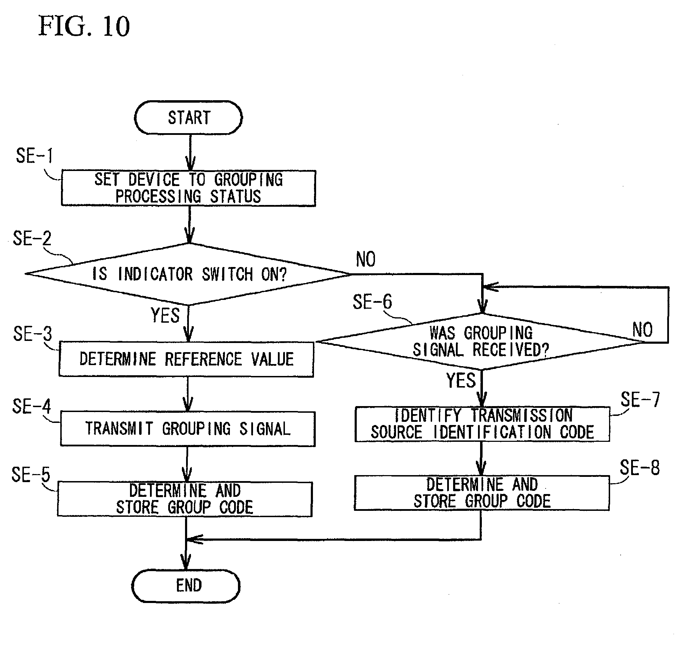

In the same manner as the first embodiment, any number of alarm devices 1 can be subjected to grouping processing, but in the description below the assumption is made that grouping processing is performed for the two alarm devices 1A and 1B shown in FIG 3. FIG. 10 is a flowchart showing the flow of grouping processing.

When performing grouping processing of the alarm device 1, the alarm device 1 is set to grouping processing mode by a predetermined input operation (step SE-1). Upon entering the grouping processing mode, the control section 15 checks the state of the instruction switch 16 (step SE-2). If the instruction switch 16 has input an instruction into the control section 15 indicating that the transmission source identification code be set as the reference value (Yes in step SE-2), the control section 15 references the storage section 10, and designates the transmission source identification code stored in this storage section 10 as the reference value (step SE-3). Then, the control section 15 transmits a grouping signal, containing the transmission source identification code designated as the reference value and an indicator signal showing that the transmission is based on an instruction input from the instruction switch 16, by means of the communication section (step SE-4). At this time, the control section 15 stores a value, obtained by adding the transmission source identification code to the designated reference value, in the storage section 10 (step SE-5).

On the other hand, if the instruction switch 16 has not input an instruction into the control section 15 indicating that the transmission source identification code be set as the reference value (No in step SE-2), the control section 15 waits until the communication section receives a grouping signal from another alarm device 1 (step SE-6). When the communication section receives a signal from another alarm device 1, and the control section 15 confirms that the received signal contains an instruction signal (Yes in step SE-6), the control section 15 identifies the transmission source identification code added to the input grouping signal (step SE-7). Then, the control section 15 stores a value, obtained by adding the identified transmission source identification code to its own transmission source identification code, in the storage section 10 as the group code (step SE-8), thus concluding grouping processing.

When grouping the alarm devices 1A and 1B, by means of the instruction switch 16 of the alarm device 1A, an instruction indicating that the transmission source identification code of the alarm device 1A be set as the reference value is input into the control section 15. As a result, the control section 15 of the alarm device 1A designates its own transmission source identification code "101" as the reference value, and stores a value of "202", obtained by adding its own transmission source identification code "101" to this reference value, in the storage section 10 as the group code. Also, a grouping signal containing an instruction signal and the reference value is transmitted by means of the communication section.

The control section 15 of the alarm device 1B, upon receiving the grouping signal by means of the communication section, stores a value of "203", obtained by adding its own transmission source identification code "102" to the reference value "101" included in the received grouping signal, in the storage section 10 as the group code.

Moreover, in a case where three or more alarm devices 1 are subjected to grouping processing, by using the transmission source identification code "101" of the alarm device 1A as the reference value, group codes can be determined in the same manner as in the description above.

### (Effects of the second embodiment)

In this manner, according to the second embodiment, during grouping processing, in response to an instruction input from an instruction switch 16 of an arbitrary alarm device 1, the transmission source identification code of this alarm device 1 is designated the reference value, and group codes are determined from this reference value and the transmission source identification codes of each alarm device 1. Accordingly, a different group code can be assigned to each alarm device 1, and conflicts with the group codes used by alarm devices 1 associated with other communication systems can be prevented.

### [III] Modified examples of the respective embodiments

Although embodiments of the present invention were described above, various alterations and improvements can be made to the specific construction and measures used in the present invention provided that they do not depart from the scope of the appended claims.

### (Relationships to other embodiments)

The embodiments described above can be combined in arbitrary combinations. For example, the alarm devices 1 of both the first embodiment and the second embodiment can be combined, so that the reference value is determined either by the relative sizes of the transmission source identification codes of each alarm device 1, or by an instruction input from the instruction switch 16.

### (Regarding the reference value)

In the embodiments described above, the transmission source identification code of an arbitrary alarm device 1 associated with the communication system is designated the reference value, and group codes are determined by adding the transmission source identification code of each alarm device 1 to the reference value. However, an arbitrary fixed value may be used as the reference value thereinstead. For example, for a plurality of alarm devices 1, by storing a value obtained by adding the transmission source identification code of each alarm device 1 to the same reference value in the storage section 10 as the group code, group codes can be set in advance.

### (Regarding grouping processing and signal analysis processing)

In the description of the embodiments above, in grouping processing, the control section 15 of each alarm device 1 determines a group code by adding the reference value to its own transmission source identification code. However, group codes may be determined by an arbitrary calculation involving operations other than addition (for example, subtraction, multiplication, division, or a combination thereof). By then changing, in a corresponding manner, the content of the calculations performed during signal analysis processing to identify received signals, signal identification can be performed.

For example, the control section 15 of the alarm device 1 may determine the group code by multiplying its own transmission source identification code by the reference value. In a corresponding manner, in step SB-3 of the signal analysis processing shown in FIG. 6, by determining whether or not GP1 = GP2 = SN2 x SN1 is satisfied, signal identification can be performed.

### (Regarding updating group codes)

In the embodiments described above, the timing of the grouping processing is arbitrary. However, grouping processing may be repeated periodically. In this case, the group codes can be changed each time grouping processing is performed. For example, a value obtained by adding a given value (for example, a random number generated by the control section 15) to the old group code can be set as the new group code. By this process, group codes can be changed periodically, thereby enhancing security.

### [Third embodiment]

Hereafter, an alarm device according to a third embodiment of the present invention is described in detail.

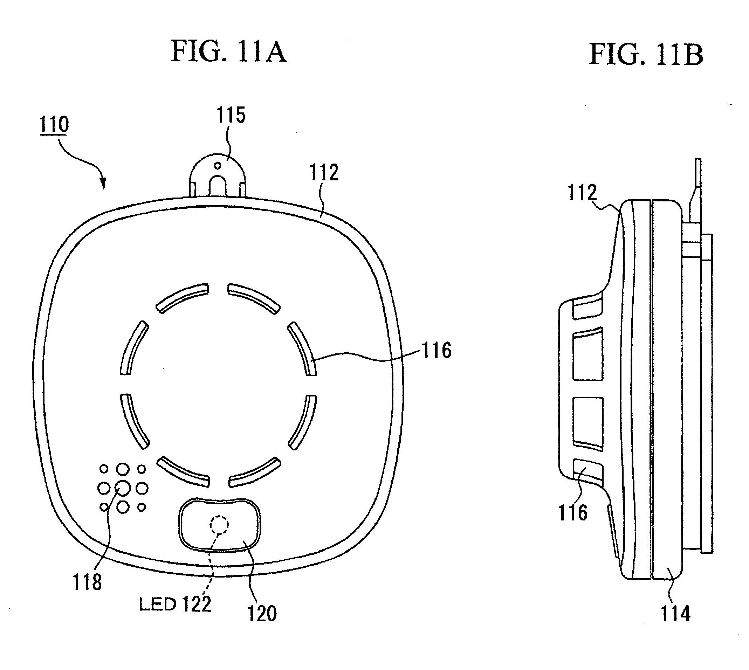

FIG. 11A and FIG. 11B are explanatory drawings showing the outward appearance of a wireless alarm device according to the present embodiment, wherein FIG. 11A shows a front view, and FIG 11B shows a side view.

In FIG. 11A and FIG. 11B, an alarm device 110 of the present embodiment includes a cover 112 and a main unit 114. At the center of the cover 112, a smoke detector section 116, having openings through which smoke can enter formed around the periphery thereof, is disposed, which detects a fire when smoke from the fire reaches a predetermined concentration.

As shown in FIG. 11A, at the lower left side of the smoke detector section 116 of the cover 112, a sound hole 118 is provided. A speaker is housed behind this sound hole 118, such that an audible alarm or voice message can be output through the sound hole 118. Underneath the smoke detector section 116, an alarm stop switch 120 is provided. The alarm stop switch 120 also functions as a test switch.

Inside the alarm stop switch 120, an LED 122 is installed as illustrated by the dashed line. When the LED 122 is lit, the lit status of the LED 122 can be recognized from outside through the switch cover of the alarm stop switch 120.

Furthermore, a mounting hook 115 is provided at the top of the back side of the main unit 114, and by screwing a screw (not shown) into a wall of the room where the alarm device 110 is to be installed, and fitting the mounting hook 115 over this screw, the alarm device 110 can be mounted to the wall surface.

Although with the alarm device 110 shown in FIG. 11A and FIG. 11B, an example of a configuration in which the smoke detector section 116 detects smoke from a fire is used, alarm devices that includes a thermistor to detect the heat of a fire, or alarm devices that detect gas leaks instead of a fire, are also within the scope of the present invention.

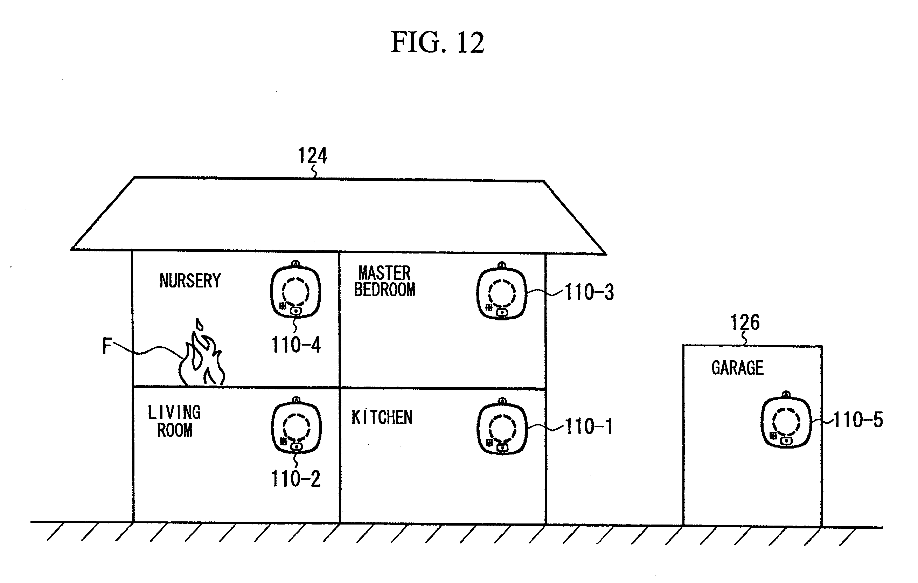

FIG. 12 is an explanatory drawing showing a situation in which alarm devices of the present embodiment are installed in a residence. In the example in FIG. 12, alarm devices 110-1 to 110-4 of the present embodiment are installed in the kitchen, living room, master bedroom, and nursery respectively, and an alarm device 110-5 is also installed in an external garage 126.

Each of the alarm devices 110-1 to 110-5 is provided with a function for exchanging event signals with each other by wireless transmission and reception, and the five alarm devices 110-1 to 110-5 form a single linked group to monitor for fires throughout the entire residence 124. Formation of the linked group can be realized at the factory or during installation in the residence 124, by arranging the alarm devices 110-1 to 110-5 in a single location such as a work table and performing an alarm registration step.

The alarm registration step involves processing where the alarm devices 110-1 to 110-5 are sequentially placed in registration send mode one at a time and transmit a registration event signal, and the other alarm devices which are waiting in registration receive mode receive the registration event signal, acquire the transmission source code from the registration event signal, and register the code in a memory.

In the monitoring stage after the alarm registration is performed to form the linked group, if a fire occurred in the nursery of the residence 124, then the alarm device 110-4 detects the fire and starts a warning process. Detecting the fire and starting the warning process is called "alert activation" in an alarm device.

When the alarm device 101-4 undergoes the alert activation, the alarm device 110-4 functions as the linkage-source, and to the other alarm devices 110-1 to 110-3 and 110-5 serving as the linkage-destinations, wirelessly transmits an event signal indicating the fire alert.

The other alarm devices 110-1 to 110-3 and 110-5, upon receiving the event signal indicating the fire alert from the alarm device 110-4 serving as the linkage-source, if the source identification code acquired from the event signal matches with a pre-registered transmission source code registered in the memory by alarm registration, perform alert activation behavior as a linkage-destination based on the nature of the event.

As the audible alarm of the alarm device 110-4 serving as the linkage-source, for example a siren followed by a voice message "The fire alarm has activated. Please verify." may be output continuously. On the other hand, the linkage-destination alarm devices 110-1 to 110-3 and 110-5 continuously output a siren followed by a voice message "The fire alarm in another room has activated. Please verify." In a state where the alarm devices 110-1 to 110-5 are outputting an audible alarm, if the alarm stop switch 120 provided on the alarm device shown in FIG. 11A and FIG. 11B is operated, processing to stop the audible alarm takes place.

Furthermore, the alarm devices 110-1 to 110-5 include failure monitoring functionality, and when a failure is detected, a warning sound, for example a beep, is output intermittently at predetermined intervals to report that a failure has occurred.

Moreover, the failure source alarm device where the failure is detected wirelessly transmits an event signal indicating the failure to the other alarm devices, and in the other alarm devices, the same failure warning is output conditional upon the transmission source code acquired from the event signal matching a pre-registered transmission source code registered in the memory during alarm registration. As a result, when a failure is detected in any of the alarm devices, a failure warning is output from all of the alarm devices that constitute the linked alarm group.

The failure warning output from the alarm devices can be stopped by operating the alarm stop switch 120. In the present embodiment, of the failures detected and reported by an alarm device, a low battery warning which detects and warns of a reduction in the battery voltage in the local alarm device is the most common, and others include warnings of pertinent failures such as the failure of a sensor in a smoke detector section or the like.

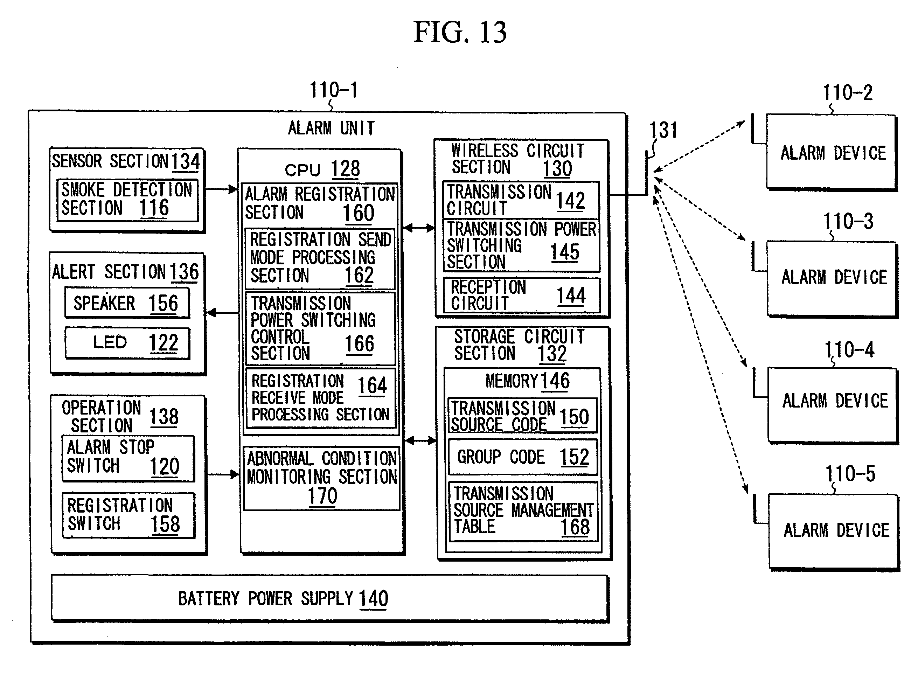

FIG. 13 is a block diagram showing the alarm device of the present embodiment. Of the five alarm devices 110-1 to 110-5 shown in FIG. 12, FIG. 13 shows in detail the circuit structure for the alarm device 110-1.

The alarm device 110-1 includes a CPU 128. Furthermore, associated with the CPU 128 are provided a wireless circuit section 130 including an antenna 131, a storage circuit section 132, a sensor section 134, an alert section 136, an operation section 138, and a battery power supply 140.

In the wireless circuit section 130, a transmission circuit 142, a reception circuit 144, and a transmission power switching section 145 are provided, enabling the wireless transmission and reception of event signals to and from the other alarm devices 110-2 to 110-5. As the wireless circuit section 130, within Japan for instance, preferably a configuration is employed that conforms with STD-30 (a standard for wireless communication equipment in wireless stations for low power security systems) or STD-T67 (a standard for telemeters, telecontrol, and data transmission radio equipment for specified low power radio stations) which are known standards for specified low power radio stations in the 400 MHz band.

Naturally, as the wireless circuit section 130, in locations other than Japan, preferably a configuration is employed that conforms to the standards for allocated wireless base stations in that region.

The reception circuit 144 performs reception on an intermittent basis. The intermittent reception behavior of the reception circuit 144 includes, for example, a reception period of T101 = 5 milliseconds followed by a waiting period of T102 = 10 seconds, yielding intermittent reception in a cycle of T112 (= T101 + T102). To accommodate this intermittent reception, the transmission circuit 142 transmits an event signal continuously for a period of T103 which equals or exceeds the intermittent reception period T112 (=T101 + T102).

The transmission power switching section 145, during alarm registration, according to a control signal from the CPU 128, switches the radio waves of event signals transmitted from the antenna 131 to the other alarm devices 110-2 to 110-5 to either a normal transmission power or a reduced transmission power. By reducing the transmission power during alarm registration in this manner, the area over which registration event signals can be received is limited to a small area.

As specific examples of the transmission power switching section 145, for example, appropriate methods can be employed such as reducing the gain (amplification factor) of a transmission amplifier from a normal gain to a gain for registration, or connecting an attenuator to the output of the transmission amplifier during registration to reduce the transmission power supplied to the antenna.

In the storage circuit section 132, a memory 146 is provided. In the memory 146, a transmission source code 150 which serves as an ID for identifying the alarm device is provided, and a group code 152 for identifying the group is stored therein as needed. As the transmission source code 150, based on the estimated number of alarm devices to be supplied throughout the country, a 26 bit code is used, for example, thereby ensuring that the same code is not used more than once.

In addition, in the memory 146, a transmission source management table 168 is recorded. In the transmission source management table 168, the transmission source codes of the other alarm devices 110-2 to 110-5 with which a linked group is formed by alarm registration processing are registered.

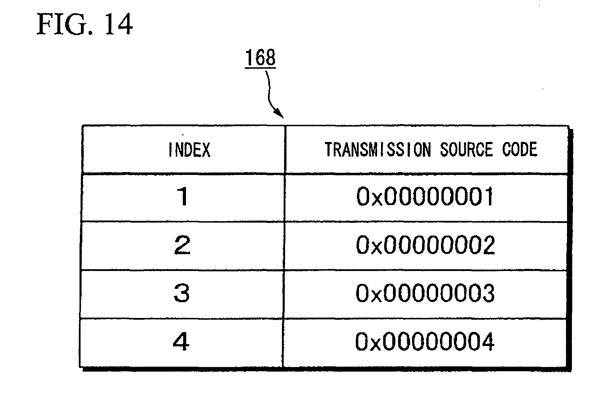

FIG. 14 extracts and shows the contents registered in the transmission source management table 168 in FIG. 13, and by means of the alarm registration processing described later, the transmission source codes 0x00000001 to 0x00000004 of the alarm devices 110-2 to 110-5 are registered in indexes 1 to 4. The leading 0x indicates a hexadecimal value.

As shown in FIG. 13, in the sensor section 134, a smoke detector section 116 is provided which outputs a smoke detection signal corresponding with the smoke concentration to the CPU 128. In the sensor section 134, other than the smoke detector section 116, a thermistor which detects the heat of a fire may be provided. Furthermore, in the case of an alarm device that monitors for gas leaks, a gas leak sensor is provided in the sensor section 134. Furthermore, the memory 146 may be provided in the storage area inside the CPU 128.

In the alert section 136, a speaker 156 and an LED 122 are provided. The speaker 156 outputs a voice message or audible alarm from a voice synthesizer circuit section (not shown). The LED 122, by blinking, flashing, illuminating, or similar, indicates a failure or an abnormal condition such as a fire.

In the operation section 138, an alarm stop switch 120 and a registration switch 158 are provided. By operating the alarm stop switch 120, the audible alarm being emitted from the alarm device 110-1 can be stopped. In the present embodiment, the alarm stop switch 120 also functions as a test switch.

The alarm stop switch 120 is enabled when an audible alarm is being output from the alert section 136 through the speaker 156. On the other hand, in the normal monitoring status in which no audible alarm is being output, the alarm stop switch 120 functions as a test switch, and when the test switch is pressed, a voice message or the like for testing purposes is output from the alert section 136.

As the registration switch 158, a DIP switch or the like mounted on the circuit board inside the casing is used. When the operation to turn on the registration switch 158 is performed, the alarm registration processing for forming a linked group is executed by way of the functionality of an alarm registration section 160 provided in the CPU 128.

As the battery power supply 140, for example an alkaline battery with a predetermined number of cells is used, and as for battery capacity, a battery life of approximately 10 years is ensured by reducing the power consumption of the overall circuitry in the alarm device 110-1 including the wireless circuit section 130.

In the CPU 128, as functionality realized by program execution, the alarm registration section 160 and an abnormal condition monitoring section 170 are provided. Furthermore, as functions of the alarm registration section 160, a registration send mode processing section 162, a registration receive mode processing section 164, and a transmission power switching control section 166 are provided.

The alarm registration section 160 activates following the initialization processing performed when the battery power supply 140 first supplies power to the CPU 128. In the initial state where the registration switch 158 is off, the alarm registration section 160 is in registration receive mode in which the functionality of the registration receive mode processing section 164 is activated. When the operation to turn on the registration switch 158 is performed, registration send mode is entered in which the functionality of the registration send mode processing section 162 is activated.

The registration send mode processing section 162, when the registration switch 158 is on and registration send mode is in effect, transmits a registration event signal containing its own transmission source code 150 to the other alarm devices. At this time, in the present embodiment, the transmission power switching control section 166 performs switching control of the transmission power switching section 145 to reduce the normal transmission power of the transmission circuit 142 to a transmission power appropriate for alarm registration, after which the registration event signal is transmitted to the other alarm devices 110-2 to 110-5.

The normal transmission power is 1 milliwatt, for example, which is reduced for example to one fifth, that is 0.2 milliwatts, during the alarm registration. This transmission power is sufficient with respect to the reception sensitivity of the alarm devices 110-2 to 110-5 arranged on the table for the purposes of the alarm registration, but sufficiently weak as to fall short of the reception sensitivity of the alarm devices in other linked groups undergoing alarm registration at the same time in another location. Reception sensitivity means the minimum signal strength that the alarm device can receive under normal circumstances.

The registration receive mode processing section 164, when the registration switch 158 is off and registration receive mode is in effect, registers, in the transmission source management table 168 of the memory 146, the transmission source code in an event signal received from another alarm device within the same group which is in registration send mode and operating with reduced transmission power.

In the abnormal condition monitoring section 170, upon detecting a fire when the smoke detection signal from the smoke detector section 116 provided in the sensor section 134 exceeds the level of fire, an audible alarm indicating a linkage-source, for example a siren and "The fire alarm has activated. Please verify.", is output repeatedly from the speaker 156 of the alert section 136, and an event signal indicating the fire alert is transmitted from the antenna 131 by the transmission circuit 142 of the wireless circuit section 130 to the other alarm devices 110-2 to 110-5.

Furthermore, the abnormal condition monitoring section 170, upon receiving an event signal indicating a fire alert from any of the other alarm devices 110-2 to 110-5 via the reception circuit 144 of the wireless circuit section 130, decodes the event signal and acquires the transmission source code. Then, if the acquired transmission source code matches with any of the pre-registered transmission source codes registered in the transmission source management table 168, that is, if the event signal is recognized as coming from an alarm device in the same group, depending on the content of the event, an audible alarm indicating a linkage-destination, for example a siren and "The fire alarm in another room has activated. Please verify.", is output repeatedly from the speaker 156 of the alert section 136.

On the other hand, if the transmission source code acquired by decoding the event signal was not registered in the transmission source management table 168, the event signal is judged not to have come from an alarm device in the same group, and the received event signal is disregarded.

Here, when the abnormal condition monitoring section 170 detects a fire alarm and outputs the linkage-source audible alarm, the LED 122 of the alert section 136 flashes, for example. On the other hand, when the linkage-destination audible alarm is output, the LED 122 of the alert section 136 blinks, for example. As a result, the appearance of the LED 122 during a linkage-source alarm and a linkage-destination alarm can be distinguished. Naturally, the same flashing or blinking behavior can be used by the LED 122 for alarms issued by the linkage-source and the linkage-destination.

Furthermore, when the abnormal condition monitoring section 170 detects a low battery failure due to a drop in the voltage of the battery power supply 140, an audible failure alarm is output by outputting a low battery alarm in the form of a short beep at 1 minute intervals, for example, and an event signal indicating the failure is transmitted to the other alarm devices 110-2 to 110-5.

Moreover, the abnormal condition monitoring section 170, upon receiving an event signal indicating a failure from any of the other alarm devices 110-2 to 110-5, performs linked output of an audible failure alarm by intermittently emitting the low battery alarm in the same manner. When reporting this low battery at a linkage-destination, the LED 122 may blink in unison with the audible alarm.

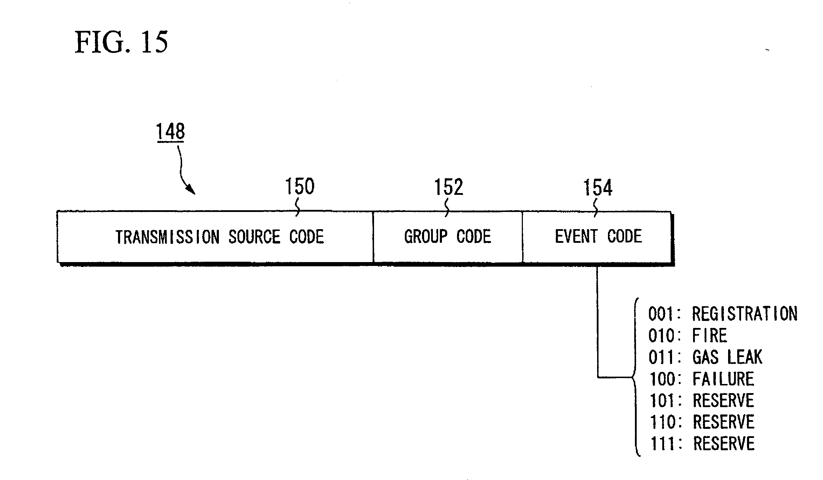

FIG. 15 is an explanatory drawing showing the format of an event signal used in the present embodiment. As shown in FIG. 15, the event signal 148 includes a transmission source code 150, a group code 152, and an event code 154. The transmission source code 150 is for example a 26 bit code. Furthermore, the group code 152 is for example an 8 bit code, and the same group code is assigned to alarm devices in the same group, for example the five alarm devices 110-1 to 110-5 in FIG. 13.

The event code 154 is a code that represents the content of the event, such as an abnormal condition like registration, fire, or a gas leak, or a failure. In the present embodiment, a 3-bit code is used; for example, "001" is registration, "010" is a fire, "011" is a gas leak, and "100" is a gas leak, with the remainder kept in reserve.

By increasing the number of bits of the event code 154 to 4-bit or 5-bit when the number of event types increases, the event code can represent a plurality of event types.

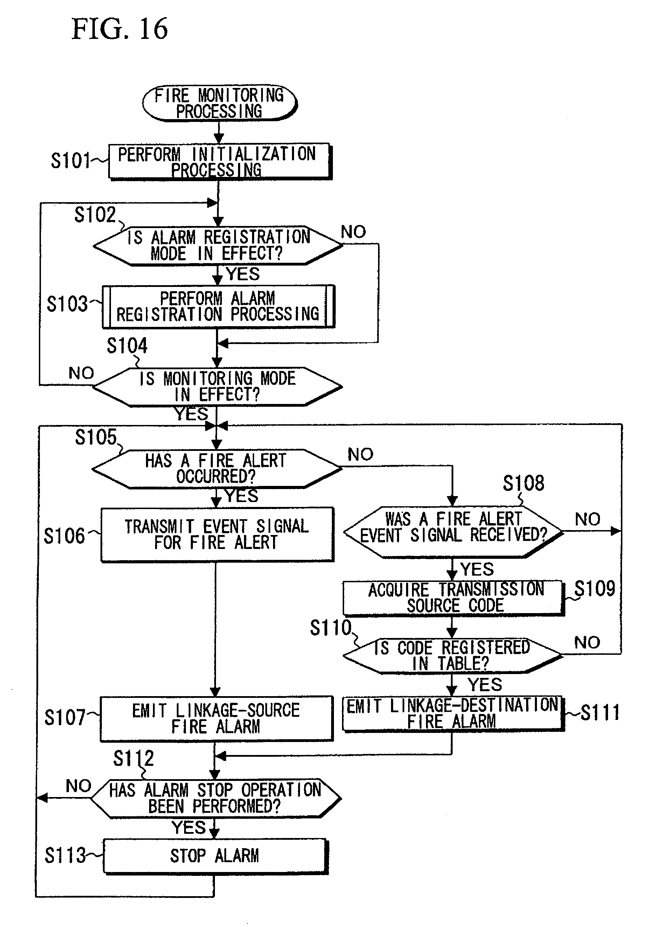

FIG. 16 is a flowchart showing the processing of the CPU 128 provided in the alarm device 110-1 shown in FIG. 13. In FIG. 16, when power is supplied to each part of the circuit including the CPU 128 by, for example, removing a sticker from an electrode of the battery power supply 140 provided in the alarm device 110-1, the CPU 128 begins initialization processing in step S101. Subsequently, a determination is made in step S102 as to whether or not alarm registration mode is in effect, and because alarm registration mode is entered following initial setup, the flow advances to step S103 and alarm registration processing is executed.

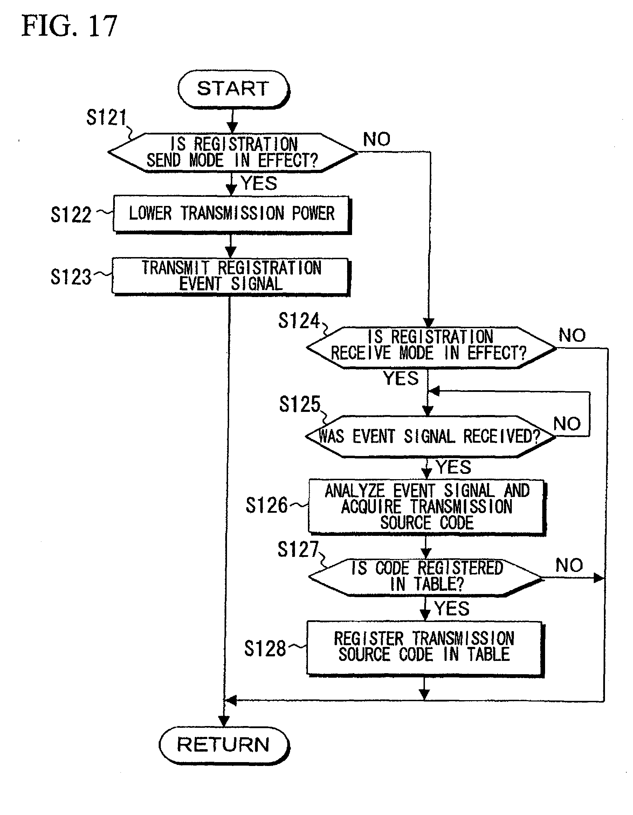

Details of the alarm registration processing of step S103 are shown in FIG. 17. When alarm registration processing is completed, a state is attained in which the transmission source codes acquired from the event signals from the other alarm devices 110-2 to 110-5 shown in FIG. 14 are recorded in the transmission source management table 168 provided in the memory 146 of the alarm device 110-1. When the alarm registration processing of step S103 concludes, a judgment is made in step S104 that monitoring mode is in effect, and the abnormal condition monitoring processing of steps 105 and onward is executed.

This abnormal condition monitoring processing, in step S105, determines whether a fire alert is executed according to whether or not the smoke detection signal from the smoke detector section 116 provided in the sensor section 134 exceeds a predetermined fire level. If a determination is made in step S105 that a fire alert is executed, the flow advances to step S106, an event signal for the fire alert is transmitted to the other alarm devices 110-2 to 110-5, and then in step S107 the linkage-source fire alarm is output in the form of sound output from the speaker 156 of the alert section 136 and controlled illumination of the LED 122.

After the linkage-source fire alarm is performed, a determination is made in step S 112 as to whether or not an alarm stop operation has been performed by the alarm stop switch 120, and if the alarm stop operation has been performed, the alarm is stopped in step S113.

On the other hand, if a fire alert is not judged to be executed in step S105, then a check is performed in step S108 to determine whether a fire alert event signal has been received from the other alarm devices 110-2 to 110-5. If a determination is made in step S108 that a fire alert event signal was received from another alarm device, in step S109, the received event signal is analyzed and the transmission source code is acquired. Furthermore, in step S110 a comparison is made with the pre-registered transmission source codes in the transmission source management table 168 shown in FIG. 14, and if one of the pre-registered transmission source codes matches, this event signal from the other alarm device is deemed valid, and in step S111 the linkage-destination fire alarm is acquired based on the event contents included in the event signal. Furthermore, if in step S112 an alarm stop operation has been performed, the alarm is stopped in step S113.

On the other hand, if in step S110 the transmission source code acquired from the received event signal is not registered in the transmission source management table 168, the event signal has come from an alarm device in another group and is disregarded.

FIG. 17 is a flowchart showing in detail the alarm registration processing in step S103 of FIG. 16. In FIG. 17, in the alarm registration processing of the present embodiment, first a determination is made as to whether or not registration send mode is in effect.

Of the alarm devices 110-1 to 110-5 arranged for the purpose of forming a linked group, if the registration switch 158 provided in the alarm device 110-1 is on, a determination is made in step S121 that registration send mode is in effect, and the functionality of the registration send mode processing section 162 provided in the CPU 128 is activated.

The registration send mode processing section 162 then operates the transmission power switching control section 166, to output a control signal to the transmission power switching section 145 provided in association with the transmission circuit 142 of the wireless circuit section 130. In addition, transmission power is switched from a normal transmission power to a reduced transmission power for alarm registration, and in this state, a registration event signal is transmitted to the other alarm devices 110-2 to 110-5 as shown in step S123.

Therefore, the radio waves of the registration event signal transmitted from the alarm device 110-1 set to registration send mode are weaker than in normal situations, and although the transmission power is sufficient with respect to the reception sensitivity of the alarm devices 110-2 to 110-5 arranged closely for the purposes of forming a linked group, the radio waves are sufficiently weak as to fall short of the reception sensitivity of the plurality of alarm devices arranged in another location for the purpose of forming a different group, and thus in this state signals cannot be received normally.

The same applies to the alarm devices 110-1 to 110-5 that form the linked group, in that even if alarm registration is taking place nearby for alarm devices in another group and a registration event signal is transmitted, the transmission power is also lowered in the other alarm devices in the same manner and only a weak signal is transmitted. As a result, even if the alarm devices 110-1 to 110-5 receive a registration event signal from another group that is simultaneously performing alarm registration, the received signal falls short of the reception sensitivity, and the registration event signal is disregarded. Accordingly, a situation in which a registration event signal from another group is mistakenly registered in the transmission source management table 168 can be avoided.

On the other hand, if the registration send mode is not in effect in step S121, the flow advances to step S124, and the registration receive mode is determined conditional upon the registration switch 158 being off. When the registration receive mode takes effect, the functionality of the registration receive mode processing section 164 is activated.

When the functionality of the registration receive mode processing section 164 is activated, in step S125, whether or not an event signal has been received from the other alarm devices is checked. Then, when an event signal is received, the flow advances to step S126, the event signal is decoded to acquire the transmission source code, and if a determination is made in step S127 that the transmission source code is not registered in the transmission source management table 168, then in step S128, the newly received transmission source code is registered in the transmission source management table 168.

During the processing of the registration receive mode in steps S124 to S128, because the registration event signals from other alarm devices, by the processing of the registration send mode shown by steps S121 to S123, are transmitted at a lower transmission power than that of normal operation, the only event signals that can be received in the registration receive mode are the registration event signals from the other alarm devices associated with the same group which are arranged closely for the purpose of undergoing group registration. Accordingly, the erroneous registration of transmission source codes based on the registration event signals from alarm devices of other groups undergoing alarm registration in a different location can be reliably prevented.

### [Fourth embodiment]

An alarm device according to an example not part of the present invention is described below with reference to the appended drawings.

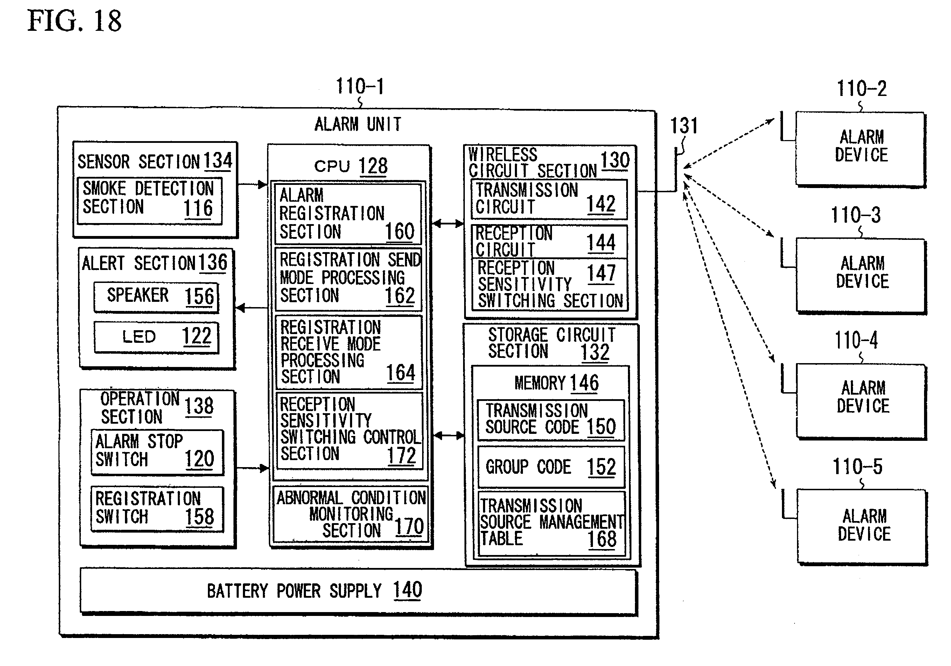

FIG. 18 is a block diagram showing an alarm device according to an example not part of the present invention. In the same manner as for the third embodiment shown in FIG. 13, the configuration of the alarm device 110-1 is shown as a representative example.

In the example shown in FIG 18, a reception sensitivity switching control section 172 is provided associated with the registration receive mode processing section 164 in the alarm registration section 160 provided as functionality of the CPU 128. Furthermore, as the control target of the reception sensitivity switching control section 172, a reception sensitivity switching section 147 is provided associated with the reception circuit 144 provided in the wireless circuit section 130.

The registration send mode processing section 162 takes effect in the registration send mode entered by switching on the registration switch 158 provided in the operation section 138, and transmits registration event signals to the other alarm devices 110-2 to 110-5 from the transmission circuit 142 at the same transmission power as that of normal operation.

On the other hand, in the registration receive mode entered when the registration switch 158 is off, the registration receive mode processing section 164 takes effect. At this time, the reception sensitivity switching control section 172 activates, and controls the reception sensitivity switching section 147 provided in the reception circuit 144 to perform reception sensitivity switching so as to lower the reception sensitivity of the reception circuit 144 beyond that of normal operation.

In this manner, by performing switching to reduce the reception sensitivity in the reception circuit 144 during the alarm registration, the reception range across which registration event signals from other alarm devices can be received by the reception circuit 144 can be reduced. Accordingly, erroneous registration in the transmission source management table 168 resulting from registration event signals inadvertently received from other groups undergoing the alarm registration at the same time in a different location can be reliably prevented.

Here, the normal reception sensitivity of the reception circuit 144 is, for example, -110 dB, and which is reduced to a reception sensitivity of -60 dB by adding +50 dB during the alarm registration. Furthermore, as concrete examples of switching the reception gain by means of the reception sensitivity switching control section 172, any suitable method can be applied, for example, the gain (amplification factor) of a reception amplifier can be reduced from a normal gain to a registration gain, or an attenuator can be switched in to the input stage of the reception amplifier during registration to reduce the signal received from the antenna.

The other construction and function of the alarm device 110-1 are the same as the third embodiment shown in FIG. 13.

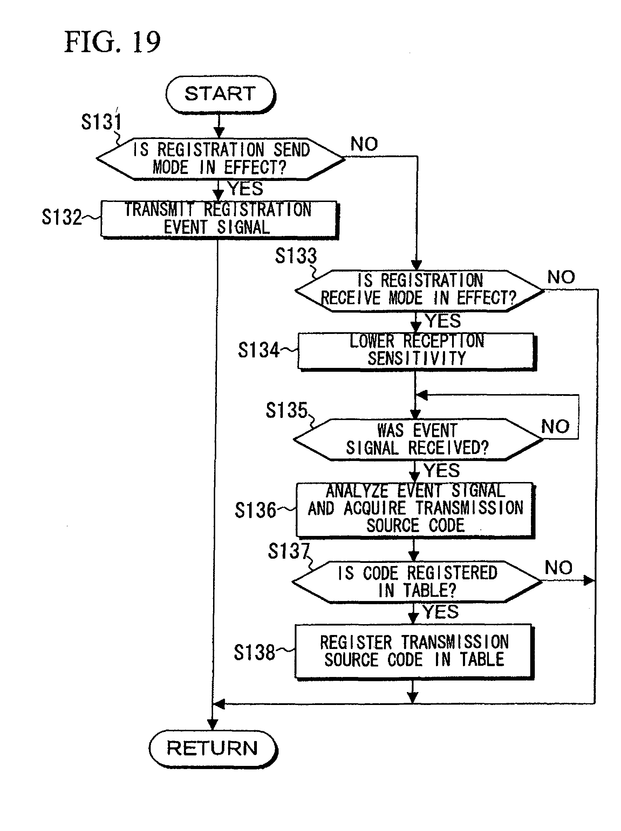

FIG. 19 is a flowchart showing the alarm registration processing in the example shown in FIG. 18. The overall processing is the same as for the third embodiment shown in FIG. 16.

In the alarm registration processing of FIG. 19, if a judgment is made in step S131 that the registration switch 158 is on and the registration send mode is in effect, then in step S132 a registration event signal is transmitted to the other alarm devices at the normal transmission power.

On the other hand, if the registration send mode is not in effect in step S131, then a judgment is made in step S133 that the registration switch 158 is off and the registration receive mode is active, and control is performed in step S134 to reduce the reception sensitivity of the reception circuit 144. In this state, a check is performed in step S135 for reception of an event signal.

If an event signal is received in step S135, then the event signal is decoded in step S136 and the transmission source code is acquired. If in step S137 the transmission source code is not registered in the table, then in step S138 the transmission source code obtained from the received event signal is registered in the transmission source management table 168.

During the processing of the registration receive mode, in step S134 the reception sensitivity of the reception circuit 144 is reduced from the normal reception sensitivity. Therefore, even if another group is undergoing the alarm registration at the same time in a different location, registration event signals transmitted from the alarm devices of the other group are received weakly in comparison to registration event signals from nearby alarm devices in the same group, and fall short of the lowered reception sensitivity. Accordingly, these registration event signals are disregarded as received signals. Therefore, erroneous registration of transmission source codes associated with registration event signals from other groups can be reliably prevented.

An alarm device according to another example not part of the present invention is described below with reference to the appended drawings.

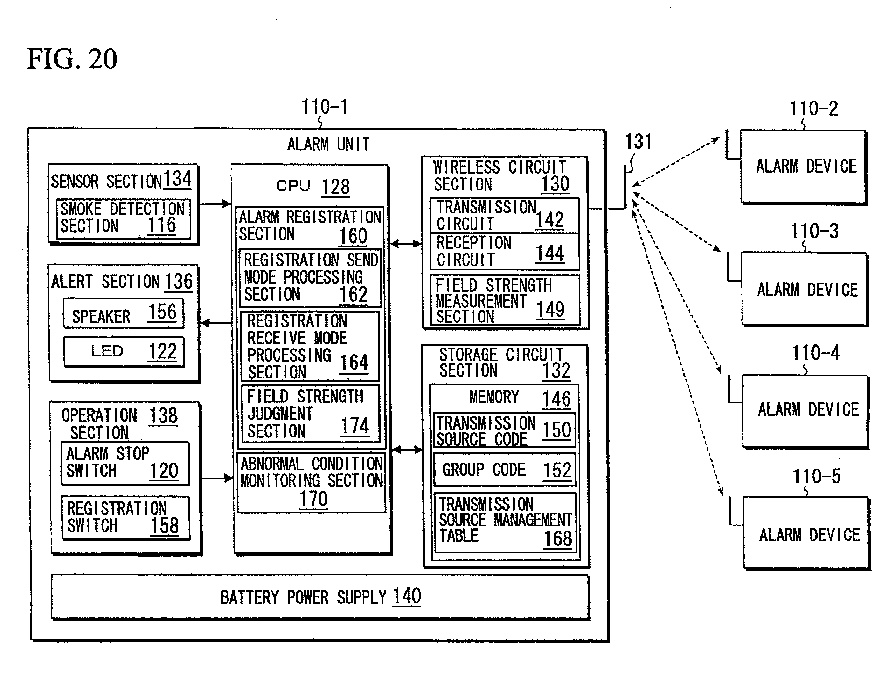

FIG. 20 is a block diagram showing an alarm device according to the other example not part of the present invention. In the same manner as for the third embodiment shown in FIG. 13, the configuration of the alarm device 110-1 is shown as a representative example.

In the other example shown in FIG 20, in the alarm registration section 160 provided as functionality of the CPU 128, a field strength judgment section 174 is provided in association with the registration receive mode processing section 164, and a field strength measurement section 149 associated with the field strength judgment section 174 is provided in the reception circuit 144 of the wireless circuit section 130.

When the registration receive mode processing section 164, while the registration switch 158 is off and registration receive mode is in effect, receives an event signal from another alarm device by means of the reception circuit 144, the field strength thereof is measured by the field strength measurement section 149 and incorporated into the field strength judgment section 174. Then, if the measured field strength meets or exceeds a predefined threshold, the event signal is deemed valid, and the transmission source code obtained by analyzing the event signal is registered in the transmission source management table 168.

The field strength measurement section 149 provided in association with the reception circuit 144 receives the radio waves of the event signal from the other alarm device and measures the field strength, that is, the carrier strength. The field strength measurement section 149 is a circuit that outputs a voltage corresponding to the field strength, whereby generally if the measurement results indicate a strong field strength the output voltage is "high", and if the field strength is weak the output voltage is "low".

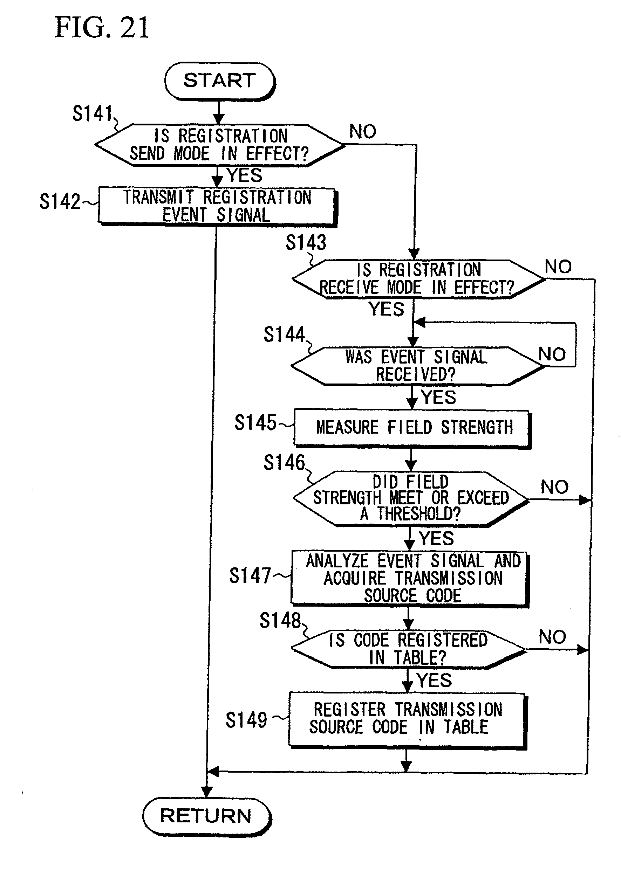

FIG. 21 is a flowchart showing the alarm registration processing in the other example shown in FIG. 20. In FIG. 21, if the registration switch 158 is switched on and a judgment is made in step S 141 that registration send mode is active, the flow advances to step S142, a registration event signal is transmitted using normal transmission power, and registration processing for transmission source codes is performed in the other alarm devices.

On the other hand, if the registration send mode is not active in step S141, the flow advances to step S143, and if the registration switch 158 is switched off and a judgment is made that registration receive mode is active, a check is performed in step S144 for reception of event signals.

If an event signal is received from another alarm device, the field strength is measured in step S145. Then, in step S146, if the measured field strength meets or exceeds the predetermined threshold, the event signal is deemed valid, and in step S147 the event signal is decoded and the transmission source code is acquired. If in step S148 the transmission source code is not registered in the transmission source management table, the transmission source code is registered in the table in step S149.

In this manner, in the alarm registration processing of the other example, the field strength is measured when a registration event signal is received from another alarm device associated with the same group, and if the measured field strength value meets or exceeds a predetermined threshold, the event signal is deemed valid and the transmission source code is acquired and registered. Furthermore, if a registration event signal is received from another group undergoing the alarm registration at the same time in a different location, the field strength of the registration event signal from the other group does not meet the threshold and the signal is disregarded, thus reliably preventing the erroneous registration of transmission source codes based on registration event signals from other groups.

In the examples above, an example was used in which the dedicated registration switch 158 is provided in the operation section 138 for the purpose of the alarm registration, but instead of providing the dedicated registration switch 158, the alarm stop switch 120 may also serve this purpose. For example, alarm registration mode may be entered and a registration event signal transmitted when the alarm stop switch 120 is pressed and held for a predetermined length of time.

Furthermore, in the embodiments and examples above, an example of an alarm device intended to detect fires was used, but the alarm registration processing of the present embodiment can be applied without modification to alarm devices that detect other relevant abnormal conditions, such as gas leak alarms and burglar alarms. Moreover, the present embodiment is applicable not just to residential use, but also to alarm devices with a range of applications in buildings and offices.

Furthermore, the embodiments and examples described above use an example where the sensor section is integrated with the alarm device, but an alarm device in which the sensor section is provided as a separate unit from the alarm device can also be used as another embodiment.

Furthermore, the present invention is not limited to the aforementioned embodiments, and appropriate variations that retain the objectives and advantages thereof are included within its scope. Moreover, the invention is not limited only to the numerical values indicated in the embodiments.

### INDUSTRIAL APPLICABILITY

A communication device according to the present invention is applicable to a communication device that communicates with other communication devices, and by reducing the volume of information required to distinguish signals and simplifying the task of adding communication devices to the communication system, is of particular utility in a communication device which reliably identifies signals.

## Claims

1. A communication system provided with a plurality of communication devices (1) which communicate with each other, wherein
each of the communication devices (1) comprises:
a storage device (10) which stores a first code for identifying the communication device to the exclusion of others, and a second code defined so as to differ from other communication devices on the basis of the first code and a predetermined reference value;
a transmission device (11) which transmits a signal including the first code and the second code to the other communication devices;
a reception device (12) which receives the signals transmitted from the transmission devices of the other communication devices; and
a control device (15) which performs calculation using the first code and the second code included in the signal received by the reception device, and the first code stored in the storage device, and identifies the signal according to whether or not the value obtained by the above calculation matches with the second code stored in the storage device.

2. The communication system according to claim 1, wherein
the control device (15):
in response to a predetermined input, transmits the signal to the other communication devices via the transmission device (11);
under predetermined conditions, upon receiving the signal from the other communication device, selects either the first code included in the received signal or the first code stored in the storage device based on predetermined rules, and designates the selected code as the reference value;
determines the second code from this reference value and the first code stored in the storage device (10); and
stores the thus determined second code in the storage device.

3. The communication system according to claim 1, wherein
each of the communication devices (1) further comprises an instruction device (16) which inputs to the control device (15) an instruction to set the first code stored in the storage device as the reference value; and
the control device (15):
upon receiving input of the instruction from the instruction device (16), transmits a signal containing an instruction signal indicating that the transmission is taking place in response to input from the instruction device, and the first code, to the other communication devices via the transmission device (11), and determines the second code based on the first code and stores the second code in the storage device (10);
upon receiving a signal containing the instruction signal and the first code, sets the reference value to the first code included in the signal, then determines the second code from the reference value and the first code stored in the storage device (10); and
stores the thus determined second code in the storage device.

4. The communication system according to claim 1, wherein
the control device (15):
upon receiving a predetermined input and receiving the signal from the other communication device (1), determines the second code from the first code and the second code included in the signal and the first code stored in the storage device (10); and
stores the thus determined second code in the storage device.

## Patentansprüche

1. Kommunikationssystem, ausgestattet mit einer Vielzahl von Kommunikationsvorrichtungen (1), die miteinander kommunizieren, wobei
jede der Kommunikationsvorrichtungen (1) Folgendes umfasst:
eine Speichervorrichtung (10), die einen ersten Code speichert, um die Kommunikationsvorrichtung unter Ausschluss anderer zu identifizieren und einen zweiten Code, der definiert ist, um sich von anderen Kommunikationsvorrichtungen auf der Grundlage des ersten Codes und eines vorbestimmten Referenzwerts zu unterscheiden,
eine Übertragungsvorrichtung (11), die ein Signal, darin eingeschlossen den ersten Code und den zweiten Code, an die anderen Kommunikationsvorrichtungen überträgt;
eine Empfangsvorrichtung (12), die das Signal empfängt, das von den Übertragungsvorrichtungen der anderen Kommunikationsvorrichtungen übertragen wurde; und
eine Steuervorrichtung (15), die eine Berechnung unter Verwendung des ersten Codes und des zweiten Codes durchführt, die im Signal enthalten sind, das von der Empfangsvorrichtung empfangen wird, und des ersten Codes, der in der Speichervorrichtung gespeichert ist, und das Signal gemäß dem Umstand identifiziert, ob der Wert, erhalten durch die oben angegebene Berechnung, zum zweiten Code, der in der Speichervorrichtung gespeichert ist, passt oder nicht.

2. Kommunikationssystem nach Anspruch 1, wobei
die Steuervorrichtung (15):
in Antwort auf eine vorbestimmte Eingabe, das Signal über die Übertragungsvorrichtung (11) an die anderen Kommunikationsvorrichtungen überträgt;
unter vorbestimmten Bedingungen, bei Empfang des Signals von der anderen Kommunikationsvorrichtung, entweder den ersten Code, eingeschlossen im empfangenen Signal, oder den ersten Code, gespeichert in der Speichervorrichtung, auf der Grundlage von vorbestimmten Richtlinien auswählt und den ausgewählten Code an den Referenzwert bezeichnet;
den zweiten Code von diesem Referenzwert und dem ersten Code, gespeichert in der Speichervorrichtung (10), bestimmt; und
den so bestimmten zweiten Code in der Speichervorrichtung speichert.

3. Kommunikationssystem nach Anspruch 1, wobei jede Kommunikationsvorrichtungen (1) weiter eine Anweisungsvorrichtung (16) umfasst, die in die Steuervorrichtung (15) eine Anweisung eingibt, um den ersten Code, der in der Speichervorrichtung gespeichert ist, als den Referenzwert einzustellen; und
die Steuervorrichtung (15):
beim Empfang der Eingabe der Anweisung von der Anweisungsvorrichtung (16) ein Signal überträgt, das ein Anweisungssignal umfasst, das angibt, dass die Übertragung in Antwort auf die Eingabe von der Anweisungsvorrichtung stattfindet, und den ersten Code an die anderen Kommunikationsvorrichtungen über die Übertragungsvorrichtung (11) überträgt und den zweiten Code auf der Grundlage des ersten Codes bestimmt und den zweiten Code in der Speichervorrichtung (10) speichert
beim Empfang eines Signals mit dem Anweisungssignal und dem ersten Code den Referenzwert auf den ersten Code, enthalten im Signal, einstellt, dann den zweiten Code von dem Referenzwert und dem ersten Code, gespeichert in der Speichervorrichtung (10), bestimmt; und
den so bestimmten zweiten Code in der Speichervorrichtung speichert.

4. Kommunikationssystem nach Anspruch 1, wobei
die Steuervorrichtung (15):
bei Empfang einer vorbestimmten Eingabe und beim Empfang des Signals von der anderen Kommunikationsvorrichtung (1) den zweiten Code vom ersten Code und dem zweiten Code, enthalten im Signal, und dem ersten Code, gespeichert in der Speichervorrichtung (10) bestimmt; und
den so bestimmten zweiten Code in der Speichervorrichtung speichert.

## Revendications

1. Système de communication doté d'une pluralité de dispositifs de communication (1) qui communiquent les uns avec les autres, dans lequel :
chacun des dispositifs de communication (1) comprend :
un dispositif de stockage (10) qui stocke un premier code destiné à identifier le dispositif de communication à l'exclusion des autres, et un second code défini de manière à être différents de ceux d'autres dispositifs de communication, sur la base du premier code et d'une valeur de référence prédéterminée ;
un dispositif de transmission (11) qui transmet un signal incluant le premier code et le second code aux autres dispositifs de communication ;
un dispositif de réception (12) qui reçoit les signaux émis par les dispositifs de transmission des autres dispositifs de communication ; et
un dispositif de commande (15) qui met en oeuvre un calcul en utilisant le premier code et le second code inclus dans le signal reçu par le dispositif de réception, et le premier code stocké dans le dispositif de stockage, et qui identifie le signal selon que la valeur obtenue par le calcul ci-dessus correspond ou non au second code stocké dans le dispositif de stockage.

2. Système de communication selon la revendication 1, dans lequel :
le dispositif de commande (15) :
en réponse à une saisie prédéterminée, transmet le signal aux autres dispositifs de communication par l'intermédiaire du dispositif de transmission (11) ;
dans des conditions prédéterminées, suite à la réception du signal provenant de l'autre dispositif de communication, sélectionne le premier code inclus dans le signal reçu ou le premier code stocké dans le dispositif de stockage, sur la base de règles prédéterminées, et désigne le code sélectionné en qualité de valeur de référence ;
détermine le second code à partir de cette valeur de référence et du premier code stocké dans le dispositif de stockage (10) ; et
stocke le second code ainsi déterminé dans le dispositif de stockage.

3. Système de communication selon la revendication 1, dans lequel
chacun des dispositifs de communication (1) comprend en outre un dispositif d'instruction (16) qui saisit, dans le dispositif de commande (15), une instruction visant à définir le premier code stocké dans le dispositif de stockage en tant que la valeur de référence ; et
le dispositif de commande (15) :
suite à la réception de la saisie de l'instruction en provenance du dispositif d'instruction (16), transmet un signal contenant un signal d'instruction, indiquant que la transmission a lieu en réponse à une saisie du dispositif d'instruction, et le premier code, aux autres dispositifs de communication par le biais du dispositif de transmission (11), détermine le second code, sur la base du premier code, et stocke le second code dans le dispositif de stockage (10) ;
suite à la réception d'un signal contenant le signal d'instruction et le premier code, définit la valeur de référence sur le premier code contenu dans le signal, et détermine ensuite le second code à partir de la valeur de référence et du premier code stocké dans le dispositif de stockage (10) ; et
stocke le second code ainsi déterminé dans le dispositif de stockage.

4. Système de communication selon la revendication 1, dans lequel le dispositif de commande (15) :
suite à la réception d'une saisie prédéterminée et à la réception du signal en provenance de l'autre dispositif de communication (1), détermine le second code à partir du premier code et du second code inclus dans le signal et du premier code stocké dans le dispositif de stockage (10) ; et
stocke le second code ainsi déterminé dans le dispositif de stockage.
